# EUROPEAN PATENT SPECIFICATION

(11) **EP 3 738 702 B1**
(45) Date of publication and mention of the grant of the patent: **22.05.2024**
(21) Application number: 20170809.6
(22) Date of filing: 22.04.2020
(51) Int. Cl.: B23B 35/00, B23B 39/16, B23B 39/24, B23Q 15/013, G05B 19/402

(54) **DRILLING METHOD FOR MULTI BIT DRILLING MACHINE AND CORRESPONDING DRILLING MACHINE USING SUCH METHOD**
BOHRMETHODE FÜR MEHRBIT-BOHRMASCHINE UND ENTSPRECHENDE BOHRMASCHINE MIT DIESER METHODE
PROCÉDÉ DE PERÇAGE POUR MACHINE DE PERÇAGE MULTI-FORETS ET MACHINE DE PERÇAGE CORRESPONDANTE UTILISANT UN TEL PROCÉDÉ

(30) Priority: 13.05.2019 IT 201900006745
(43) Date of publication of application: 18.11.2020
(73) Proprietor: SCM Group S.p.A., 47921 Rimini (RN) (IT)
(72) Inventor: D'AURIA, Marcello, 47921 RIMINI (RN) (IT)
(74) Representative: Tiburzi, Andrea

(56) References cited:
- EP-A1- 2 783 777
- JP-A- H06 126 514
- JP-A- 2012 166 292
- JP-B2- 2 866 709
- US-A- 3 481 247

## Description

The present invention relates to a drilling method for multi bit drilling machine and relative drilling machine using such method.

### Field of the invention

More specifically, the invention relates to a method and a machine for making multiple holes with depth precision, through the use of automatic drilling machines provided with a plurality of drilling bits.

In the following the description will be addressed to the simultaneous realization of a plurality of precision holes, through drilling machines for wooden panels and the like. However, it is clear that the same description should not be considered limited to this specific use.

### Prior art

As is well known, wood panels, wood, plastic, fiberglass or similar panels are perforated through the use of automatic drilling machines.

This operation is necessary, for example, in the manufacturing of furniture, in which several panels must be cut and drilled for subsequent assembly. These drilling machines can make a plurality of holes on the same panel simultaneously, thanks to the possibility of simultaneously using several drilling bits often (but not necessarily) arranged in series or in line.

More specifically, said holes are usually all substantially of the same size, made by the simultaneous use of drills having the same caliber and the same length.

Among the advantages of the use in the field of such machines there is therefore the possibility of significantly reducing the times for drilling the same panel, compared to the case in which said holes are made with a single bit, making one hole at a time.

As is well known, currently these automatic drilling machines with a plurality of points are provided with a plurality of spindles, so that the points can be replaced between one process and another, such that an operator is free to choose the type of required bit. The insertion of said bits in the respective spindles during their replacement is usually carried out manually by this operator.

Furthermore, the drilling machines according to the prior art have mandrels, which can only assume two positions: an extracted position, in which they are active and capable of performing the drilling with the respective installed bit, and a retracted position, in which they are not able to carry out the drilling.

The passage from this extracted and retracted position and vice versa takes place with specific actuators, typically pneumatic or hydraulic actuators, and the position of the spindle, and therefore of the bits installed on it, is generally not adjustable in intermediate positions. In this way, among other things, the machines according to the prior art can vary the number of simultaneously used bits, obviously retracting one or more than one.

Although the use of a plurality of drill bits for simultaneously making several holes on a panel allows a great optimization in machining times, one of the main drawbacks of multi-point drilling machines is that the bits may not be perfectly aligned with each other precisely because they are installed manually by an operator, as mentioned above.

This therefore implies that these bits may have vertical alignment differences or offsets, thus making holes with different depths or inaccuracies in general.

In particular, this alignment difference can vary between a few tenths of a millimeter up to a few centimeters.

The aforementioned misalignment can be particularly problematic if precision holes are required, which are necessary in various machining.

In order to overcome this drawback, the operator currently has to try to manually align the bits, for example using precision tools. However, the success or not of this manual realignment depends on the degree of experience of the operator and the degree of precision to be achieved.

Furthermore, checking the alignment carried out manually as mentioned above requires time, which entails the drilling machine to be stopped for potentially long times, thus causing an increase in production costs.

EP 2 783 777 A1 discloses a method for drilling panels according to the preamble of claim 1 and a drilling machine according to the preamble of claim 7.

### Scope of the invention

In light of the above, it is therefore an object of the present invention providing a method for drilling panels with holes made substantially simultaneously, which allows precision holes to be obtained by eliminating the mounting offsets effects for drilling bits in a multi-bit drilling machine.

A further object of the present invention is to provide an automatic drilling method, which does not require manual calibration of the bits by an operator.

Another object of the present invention is to provide a drilling method, which does not depend on the initial position of the drilling bits.

Still another object of the present invention is to provide a drilling method for panels which minimizes the downtime of the drilling machines.

Further, an object of the present invention is to provide an easy implementation and rapid execution method.

Furthermore, the object of the present invention is to provide a system for the implementation of this method, which can be easily implemented within prior art machines.

Finally, object of the present invention is to provide a system for the implementation of said method, which is economically advantageous, both as regards production and maintenance costs.

### Object of the invention

It is therefore specific object of the present invention a method for drilling panels according to claim 1 by two or more drilling bits to drill at least one panel, wherein said drilling bits are installed on a drilling unit, movable along at least one movement direction, and wherein each of said drilling bits is configured to assume an extracted position, in which it

is capable of drilling said at least one panel, and a retracted position, in which it is not capable of drilling said at least one panel, wherein said method comprises the following steps: A. arranging two or more drilling bits in said extracted position; B. detecting the relative position among said drilling bits in said extracted position or in said retracted position; C. handling said drilling unit along said at least one movement direction, so that said drilling bits in said extracted position carry out a respective hole having a respective drilling depth; and D. switching each of said drilling bits in the extracted position from said extracted position to said retracted position, any time each drilling bit reaches the respective drilling depth.

Also, according to the invention said relative position among said drilling bits in said extracted or retracted position may be equal to the alignment difference along said movement direction, among each bit of said bits.

Further, according to the invention the relative position of each drilling bit in said extracted or retracted position may be detected with respect to the drill bit of a first of said extracted or retracted drilling bits, preferably the extracted or retracted bit whose drilling bits is closer to the surface of said panel.

Always according to the invention said panel may be arranged on a worktop, and said at least one movement direction may be perpendicular to said worktop.

Also, according to the invention said detecting step B may further comprise the following sub-steps: B1. detecting the distance of each extracted bit from said worktop; B2. subtracting from each value obtained in the step B1 the thickness of said panel along said movement direction; and B3. adding the predetermined drilling depth value to each value obtained in step B2, so as to obtain movement values of said drilling unit during said step B.

Further, according to the invention said drilling depth of said bits may be equal to each other. It is a second object of the invention a drilling machine for drilling panels according to claim 7, comprising a drilling unit, movable along one direction of movement, and comprising a plurality of spindles, each capable of selectively switching from an extracted position to a retracted position and vice versa, and a plurality of drilling bits each fixed on one of the respective of said spindles, and a control unit, operationally connected to said drilling unit, to handle said drilling unit along said movement direction and to switch said spindles from said extracted position to said retracted position and vice versa, said drilling machine being characterized in that said control unit is configured to carry out the method according to the invention.

Also, according to the invention said drilling machine may comprise a worktop for supporting said panels to be drilled.

Further, according to the invention said drilling machine may comprise a measurement system. In particular, said measurement system may comprise a conductive plate, to be arranged in a reference position, at least one current generator, electrically connected to a respective drilling bit, said at least one current generator being capable of generating a reference current on command, a plurality of resistors, each series connected to said at least one generator, a detecting module, electrically connected to said conductive plate through a common knot and to each of said resistors, wherein said drilling unit is moved along said movement direction toward said conductive plate, so that, when each drilling bit touches said conductive plate, said at least one current generator generates a current and said detecting module detects the passage of said generated current passing through the respective resistor, so as to detect the relative position of said drilling unit, and said control unit passes said drilling bit from said extracted position to said retracted position.

As an alternative, according to the invention, said measure system may comprise a load cell, to be arranged in a reference position, a detecting module, electrically connected to said load cell, wherein said drilling unit is moved along said movement direction to said load cell, so that, when said load cell detects a stress caused by each drilling bit, said load cell generates an electrical signal to said detecting module so as to detect the position of said drilling unit, and said control unit switches said drilling bit from said extracted position to said retracted position.

Further, according to the invention, said detecting module may be incorporated in said control unit.

Also, according to the invention, said conductive plate or said load cell is arranged on said worktop.

Always, according to the invention, said conductive plate or said load cell is incorporated in said worktop.

### Brief description of the drawings

The present invention will be now described, for illustrative but not limitative purposes, according to its preferred embodiments, with particular reference to the figures of the enclosed drawings, wherein:
figure 1A shows a multi-bit drilling machine in a first step of the drilling method according to the present invention;
Figure 1B shows the multi-bit drilling machine in a second step of the drilling method according to the present invention;
figure 1C shows the multi-bit drilling machine in a second step of the drilling method according to the present invention;
figure 1D shows the multi-bit drilling machine in a second step of the drilling method according to the present invention;
figure 2 shows a system for measuring the alignment differences of the drill bits for the implementation of a method according to the present invention;
figure 3A shows a flow chart of the drilling method according to the present invention;
figure 3B shows a first explanatory flowchart of the first processing block of the method of figure 3A; and
figure 3C shows a second explanatory flowchart of the first processing block of the method of figure 3A.

### Detailed description

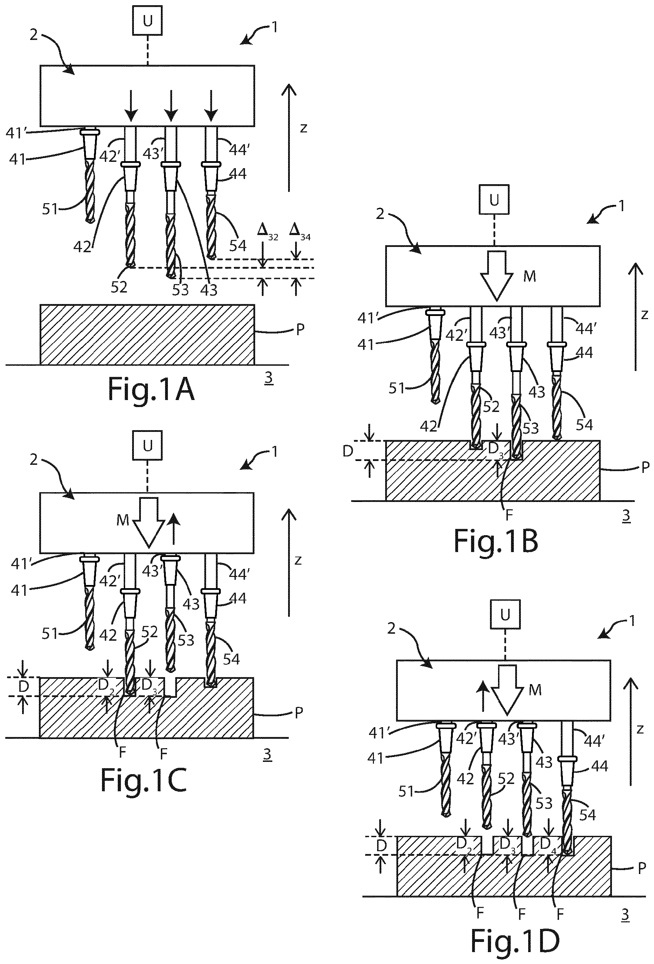

Referring to figures 1A-1D, a drilling machine is observed, indicated as a whole with the numerical reference 1, for the simultaneous production of a plurality of holes F on a panel P, wherein said holes F all have a predetermined depth D.

In particular, said drilling machine 1 or machine 1 comprises a control unit U, a drilling unit 2, having a plurality of spindles 41, 42, 43, and 44, and a plurality of drilling bits 51, 52, 53, and 54 for they are connected for drilling the panel P, and a worktop 3.

Said control unit U is for example a computer.

Said drilling unit 2 is operatively connected to said control unit U.

Furthermore, said drilling unit 2 is movable on a vertical axis Z, in the present example perpendicular with respect to the underlying worktop 3, on which the panel P to be worked is arranged.

In alternative embodiments, said Z axis may be any direction of movement Z, and may also be non-perpendicular with respect to the worktop 3, on which the panel P to be worked is arranged.

The drilling unit 2 can assume different height positions with respect to said worktop 3, so as to work panels P of different thickness and adjust the depth D of the holes F to be made on said panels P.

Specifically, the adjustment of the working height of said drilling unit 2 can take place with suitable pneumatic or hydraulic programmable means, controlled by said control unit U, to allow the exchange of the drilling bits 51, 52, 53, and 54, or for modifying the depth D of said holes F.

Said plurality of spindles comprises in the present embodiment four spindles 41, 42, 43, and 44. Of course, the number of spindles can vary according to the drilling machine 1.

Each spindle 41, 42, 43, and 44 can be installed on a respective support or stem, respectively indicated with 41', 42', 43', and 44', each movable between an extracted position and a retracted position, or each spindle 41, 42, 43, and 44 can be movable between an extracted position and a retracted position, without said supports 41', 42', 43', 44' being present, the operation of which will be better defined below.

The passage from said extracted position to said retracted position of said supports 41', 42', 43', and 44', and/or of said spindles 41, 42, 43, and 44, and vice versa, takes place with specific actuators (not shown in the figures ), typically pneumatic, each independently controlled by said control unit U.

Said supports 41', 42', 43', and 44' and/or said spindles 41, 42, 43, 44 can be independently activated between them, so that they can be placed, if necessary, in an extracted or retracted position, manually selectable from an operator for each machining, or programmable, so as to automatically change during the machining of the panels P, as better explained below.

Finally, the drilling machine 1 comprises four bits 51, 52, 53, and 54, one for each respective spindle 41, 42, 43, and 44.

In the following with "spindle in extracted position" will be indicated each spindle installed on a support in an extracted position, or each spindle, not associated with any stem, in an extracted position, and with the term "spindle in a retracted position" each spindle installed on a support in a retracted position or each spindle, not associated with any stem, in the retracted position.

Similarly, each bit coupled with a respective spindle in the extracted position will be indicated with the term "extracted bit" or "bit in the extracted position", and with the term "retracted bit" or "bit in the retracted position" each bit coupled with a respective spindle in retracted position.

The operation of the multi-point drilling machine 1 described above takes place as follows
- choosing the initial position of said spindles 41, 42, 43, 44, that is, selecting which of the spindles 41, 42, 43, 44 is in retracted or extracted position. In the case at issue, referring to figure 1A, the supports 42', 43', 44' are in the extracted position, while the support 41' alone is in the retracted position. Therefore, the drilling bits 52, 53, 54 associated with the respective mandrels 42, 43, 44 in the extracted position can perforate said panels;
- determining the position with respect to the Z axis of the end of one of the bits 52, 53, 54 in the extracted position. In the case at issue, for easiness, the extracted bit 53 is taken as reference, which, in the configuration at issue, has the bit closest to the panel P to be drilled with respect to the other extracted bits 52, 54;
- measuring the offsets of each further extracted bit 52, 54 with respect to the extracted reference bit 53. More precisely, the distances or level differences are determined, always with respect to the Z axis, of said reference bit 53 with respect to said other two bits, indicated in the figures with Δ₃₂ and Δ₃₄;

- sort said offsets Δ₃₂ and Δ₃₄ measured, from the smallest to the largest;
- lowering said drilling unit 2, so that the reference bit 53 creates a respective hole F having a predefined depth D; and
- subsequently, as soon as said reference bit 53 reaches the drilling depth D, pass the mandrel 43 associated with said bit 53 from said extracted position to said retracted position;
- said base unit 2 is further lowered by the smaller measured offset value, i.e., in the case at issue, by Δ₃₂, so that the extracted bit 52 realizes the respective hole F of depth D on said panel P;
- subsequently the mandrel 42 associated with said at least one extracted bit 52 passes from said extracted position to said retracted position; and
- iterate the last two steps, causing each drilling unit 2 to lower each time by the difference between two consecutive ordered offsets, so that each remaining extracted bit 54 creates a hole F of depth D on said panel P. In the case at issue, therefore, said drilling unit 2 is lowered by the value of the distance equal to the difference Δ₃₄-Δ₃₂, so that said bit 54 makes a respective depth hole D.

In this way, the three holes made by the bits 52, 53, and 54 all have the same depth D.

If two or more extracted bits are present, the ends of which are aligned with respect to said Z-axis, each of said two or more extracted bits will, by means of the described method, simultaneously produce a respective hole F of depth D on the panel P. In this case, each of said two or more bits will pass into the retracted position after the realization of said hole F of depth D. This passage can take place simultaneously (when two or more bits are exactly aligned) or, more generally, in sequence.

If the panels P machining requires that said extracted bits 52 53, and 54 make respective holes F having respective depths D2, D3, and D4 different from each other, it is sufficient to add to the values of each measured offset Δ₃₂ and Δ₃₄ a respective value δ₂ and δ₄ equal to the difference between the depth D2 and D3 associated with the respective hole F of each further extracted bit 52 or 54 and the depth D3 of the hole F, associated with said reference bit 53. These new offset values will be the offset values to be ordered from the smallest to the largest during the operation of said drilling machine 1.

Finally, both in the case just described and in that in which the reference bit is not the bit closest to the panel P to be drilled, an offset value of 0 will be assigned to said reference point.

Subsequently, all the offset values to be used during the machine operation will be sorted from the minimum value to the maximum value, and the first bit to reach the (respective) predetermined depth D2, D3, D4, and which will pass first in the retracted position, will be the bit associated with said minimum offset value, taking into account the sign.

In any case, all the bits 52, 53, 54, which, in the configuration shown in figures 1A and 1B, are initially in the extracted position, must have a length greater than the depth D of the holes F to be made on the panels P, and the height of the panel with respect to said Z axis has to be determined or determinable.

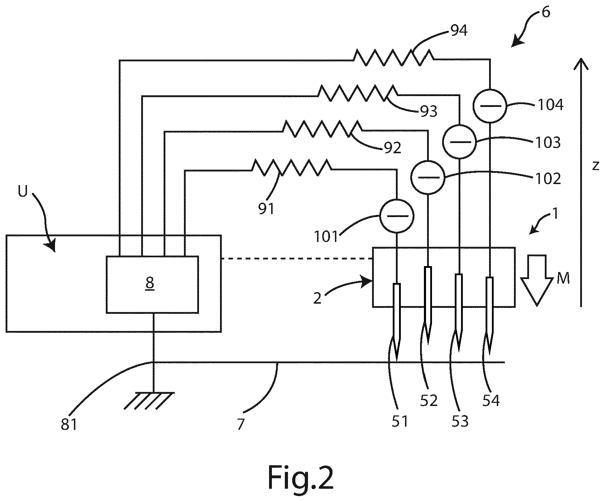

Referring to figure 2, said machine 1 can comprise a measuring system 6 for measuring said offsets among said extracted bits 51, 53, 54.

In particular, said measuring system 6 comprises a conductive plate 7, a detecting module 8, a plurality of impedances 91, 92, 93, and 94, and a plurality of current generators 101, 102, 103, 104.

Said conductive plate 7 is in fact made of electrically conductive material.

Furthermore, said conducting plate 7 rests on said worktop 3, and can have a negligible thickness with respect to the height of said panel P with reference to said axis Z.

The detecting module 8 is electrically connected to said conductive plate 7 on a common node 81.

In particular, the detecting module 8 can be a functional part of said control unit U of said drilling machine 1, or it can be controlled by it.

Furthermore, each one of said impedances 91, 92, 93, and 94, which are resistors in the present case, are each connected to said detecting module 8, and in series to a respective current generator 101, 102, 103, 104.

Each of said current generators 101, 102, 103, 104 is in turn electrically connected to a respective bit 51, 52, 53, 54.

In alternative embodiments, said impedances 91, 92, 93, and 94 can be connected, through a first common node, to a single current generator, which is in turn connected, through a second common node, to said bits 51, 52, 53, 54.

Said connection between each current generator 101, 102, 103, 104, and the respective bit 51, 52, 53, 54 can be a removable type connection.

The operation of said measuring system 6, when connected to said drilling machine 1, takes place in the following way:
Starting from a reference position with respect to the Z axis, said drilling unit 2 is first lowered according to the arrow A until the extracted bit 51, which in figure 2 is the closest to the conductive plate 7, comes into electrical contact with said conducting plate 7, closing the electrical circuit comprising said conducting plate 7 itself, said detecting module 8, said bit 51, the respective impedance 91 connected to said bit 51, and the current generator 101 thereof.

In this way, the detecting module 8 detects the passage of current in the aforementioned circuit relating to the bit 51, and detects and stores the position of the drilling unit 2, with respect to said Z-axis with respect to said bit 51.

Said bit 51 then passes from said extracted position to said retracted position.

The same procedure for measuring the position of the drilling unit 2 is repeated for the other bits 53 and 54 in the extracted position (always in the configuration shown in figure 2).

Subsequently, said drilling unit 2 is raised, returning to the initial position.

Finally, each support 41', 43', 44', whose position has been detected, is passed from said retracted position to said extracted position, after the drilling unit 2 has been raised.

As regards the memorized position of the bits, said measuring system 6 can memorize the position of said drilling unit 2, with respect to said Z axis, whenever a point 51, 53, 54 in the extracted position touches said conducting plate 7 by closing the circuit, for example using as reference the initial position of said drilling unit 2, or the position of said drilling unit 2 when the first bit 51 touches said conducting plate 7.

Alternatively, said measuring system can comprise a load cell, alternative to said conductive plate 7, and a detecting module.

Said load cell (not shown in the figures), in fact, will generate an electrical signal towards said detection module when mechanically stressed, or when touched by said drilling points 51, 52, 53, 54.

Furthermore, both in the case in which said measuring system comprises said conductive plate 7, and in the case in which a load cell is present, said conductive plate or said load cell can be integrated directly into said worktop 3.

Subsequently, said measuring system 6 will be able to calculate the value of said offsets Δᵢⱼ, starting from said measured values and/or the relative lowering between each bit, whose position has been measured in subsequent surveys, possibly together with information that allow to identify the order in which said bits touched said conducting plate 7 or said load cell.

Alternatively, said measuring system 6 can store the height of said drilling unit 2, with respect to said Z axis, when said reference bit 51 touches said conducting plate 7 or said load cell during the first detection, while in the following detections it can detect and store directly the relative lowering, with respect to the first or the previous detected bit, of said drilling unit 2 with respect to said Z axis, possibly together with the information that allows to identify the order in which said bits have touched said conductive plate 7 or said load cell.

An example of a method for tracing the order in which said bits 51, 53, 54 have touched said conducting plate 7 or said load cell consists in saving the heights of said drilling unit 2 detected with respect to said Z axis in a single ordered vector.

In fact, each element of said ordered vector can be associated with a particular support 41', 43', 44' in an extracted position, and it is sufficient to order said heights measured from the smallest to the largest, to trace the order in which said bits 51, 53, 54 have to pass from said extracted position to said retracted position.

Finally, as an alternative to the above-mentioned automatic measurement method, it is possible to detect the positions of said points with respect to said Z-axis, by means of a semi-manual or completely manual method.

For example, an operator can enter, as input values to said control unit U, the distance of each extracted tip from the panel P with respect to said Z-axis.

A program internal to said control unit U will therefore be able to choose a reference bit and calculate the relative offsets, or it will be the operator himself to supply this information manually.

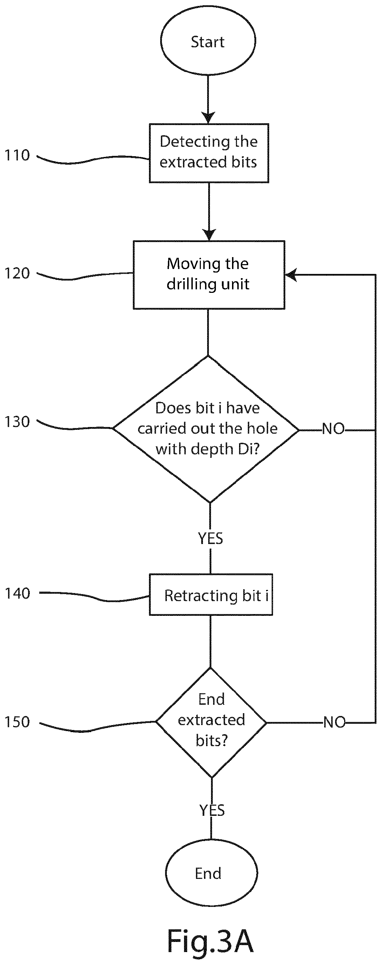

Referring to figures 3A-3C, an explanatory flowcharts of a drilling method can be observed, which can be implemented as a computer program, performed by said control unit U.

With particular reference to figure 3A, the implementation of the drilling method comprises the following main steps, briefly described below.

In a first step 110, the position of said drilling bits 51, 52, 53, 54 is detected in said extracted position.

In step 120, the drilling unit 2 is moved along the direction of movement Z.

In a third control step 130, it is checked whether at least one extracted drill bit 51, 52, 53, 54 has made on the panel P the respective hole F of the respective drilling depth D, D1, D2, D3, D4. If said control step 130 is not verified, it returns to the second processing step 120. Else, if said third control step 130 is verified, step 140 is continued, in which the extracted tip 51, 52, 53, 54, which made said hole F, is retracted.

Subsequently, in a fifth control step 150, subsequent to said fourth step 140, it is checked whether there is at least one bit 51, 52, 53, 54 in the extracted position, and, if said fifth control step 150 is not verified, the drilling procedure is terminated, else, if said fifth control step 150 is verified, it returns to said second processing step 120.

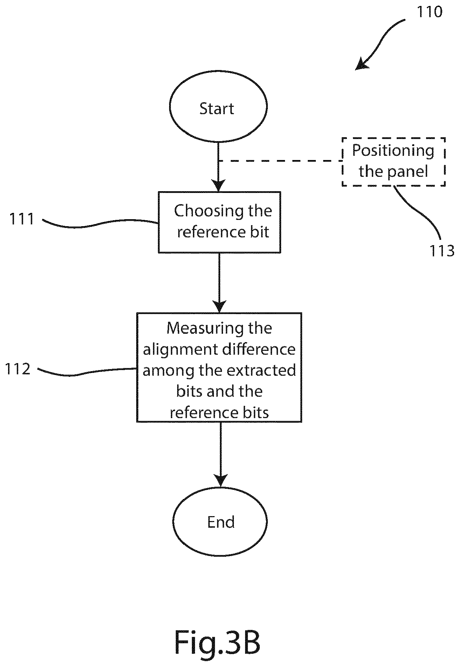

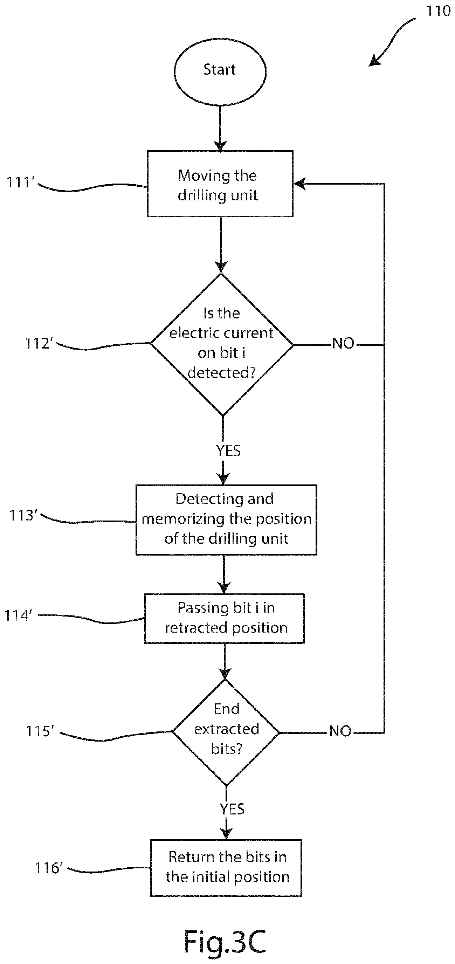

Referring to figures 3B and 3C, two respective flowcharts are observed to specify the possible internal actions of said first processing step 110.

In particular, with reference to figure 3B, said first processing step 110 can comprise the following sub-steps:
- a first sub-step 111, in which a drilling bit 51, 52, 53, 54 is selected in the extracted position as reference point; and
- a second sub-step 112, in which the alignment difference Δᵢⱼ, Δ₃₂, Δ₃₄ is measured, with respect to said direction of movement Z, between said reference bit and the drilling bits 51, 52, 53, 54 in the extracted position.

Optionally, said first processing step 110 can also have as input the position of the panel P to be drilled.

With reference to figure 3C, when said drilling machine 1 comprises said measuring system 6, said first processing step 110 can comprise the following sub-steps:
- a sub-step 111', in which said drilling unit 2 is moved along said direction of movement Z; and
- a subsequent control sub-step 112', to check whether said detecting module 8 detects the passage of a current generated by at least one of said current generators 101, 102, 103, 104 and passing through the respective impedance 91, 92, 93, 94, or the electrical signal generated by said load cell. In case of said control sub-step 112' is not verified, it returns to the processing third sub-step 111'. On the other hand, if said fourth control sub-step 112' occurs, it continues with a fifth sub-step 113 to detect and memorize the position of said drilling unit 2;
- a sub-step 114', subsequent to said fifth sub-step 113', for passing the respective tip 51, 52, 53, 54, which has closed the circuit or which has energized said load cell, from said extracted position to said retracted position.

Furthermore, there is a control sub-step 115', to verify that all the drill bits 51, 52, 53, 54 have passed into the retracted position. If said sub-step 115' is not verified, it returns to the third processing sub-step 111'. Else, if said sub-step 115' occurs, it continues with an eighth sub-step 116', to return the tips 51, 52, 53, 54 to the initial position.

Finally, it should be noted that said drilling method can be implemented in such a way as to measure the relative offset between all the drill bits, both if there are drill bits in the extracted position, and in the retracted position.

The present invention has been described for illustrative but not limitative purposes, according to its preferred embodiments, but it is to be understood that modifications and/or changes can be introduced by those skilled in the art without departing from the relevant scope as defined in the enclosed claims.

### Advantages

The method according to the present invention allows creating multiple precision holes starting from a plurality of misaligned bits 51, 52, 53, 54 placed inside a drilling machine 1, such that the precision of the holes F does not depend on the initial misalignment of said bits 51, 52, 53, 54.

A further advantage of the present invention is represented by the fact that the measurement of such misalignments of said bits 51, 52, 53, 54 can be carried out automatically or semi-automatically, minimizing the operations performed by qualified operators, and the possible errors associated with them.

In addition to the greater precision of the multiple holes F created through the method according to the present invention, a further advantage is represented by the higher execution speed of both the automatic misalignment measurement method and the drilling method.

Furthermore, the drilling method according to the present invention is advantageously independent of the height of the panel to be drilled, measured along the direction of movement Z of said drilling unit 2.

Furthermore, the systems and methods implemented for adjusting the misalignment of the bits 51, 52, 53, 54, and the automatic drilling of the panels P advantageously allow to decrease the downtime associated with the manual realignment of the bits.

Additionally, the automatic bit misalignment measurement method and/or the drilling method described employ an extremely limited number of computational resources when implemented within computers.

Another advantage of the present invention is given by the fact that the drilling machines already on the market can be adapted in such a way as to implement this drilling method.

Furthermore, the automatic measuring system for the misalignment of the bits can be connected to the machines of the prior art.

A further advantage of the present invention is that the panels can be drilled with holes having programmable misalignments.

Finally, a further advantage of the present invention is the fact that these programmable misalignments can be varied during the machining of the panels, further minimizing the machine downtimes.

## Claims

1. Method for drilling panels (P) by two or more drilling bits (51, 52, 53, 54) to drill at least one panel (P), wherein said drilling bits (51, 52, 53, 54) are installed on a drilling unit (2), movable along at least one movement direction (Z), and wherein each of said drilling bits (51, 52, 53, 54) is configured to assume an extracted position, in which it is capable of drilling said at least one panel (P), and a retracted position, in which it is not capable of drilling said at least one panel (P),
wherein said method comprises the following steps:
A. arranging two or more drilling bits (51, 52, 53, 54) in said extracted position;
B. detecting (110) the relative position (Δᵢⱼ, Δ₃₂, Δ₃₄) among said drilling bits (51, 52, 53, 54) in said extracted position or in said retracted position;
C. handling (120, 130) said drilling unit (2) along said at least one movement direction (Z), so that said drilling bits (51, 52, 53, 54) in said extracted position carry out a respective hole (F) having a respective drilling depth (D, D1, D2, D3, D4); and
**characterized in that** said method further comprises the following step:
D. switching (140) each of said drilling bits (51, 52, 53, 54) in the extracted position from said extracted position to said retracted position, any time each drilling bit (51, 52, 53, 54) reaches the respective drilling depth (D, D1, D2, D3, D4).

2. Method according to claim 1, **characterized in that** the relative position (Δᵢⱼ, Δ₃₂, Δ₃₄) among said drilling bits (51, 52, 53, 54) in said extracted or retracted position is equal to the alignment difference along said movement direction (Z), among each tip of said bits (51, 52, 53, 54).

3. Method according to any one of the preceding claims, **characterized in that** the relative position (Δᵢⱼ, Δ₃₂, Δ₃₄) of each drilling bit (51, 52, 53, 54) in said extracted or retracted position is detected with respect to the drill tip of a first of said extracted or retracted drilling bits (51, 52, 53, 54), preferably the extracted (53) or retracted bit whose tip for drilling is closer to the surface of said panel (P).

4. Method according to any one of the preceding claims,
wherein said panel (P) is arranged on a worktop (3), and
wherein said method is **characterized in that** said at least one movement direction (Z) is perpendicular to said worktop (3).

5. Method according to claim 4, **characterized in that** said detecting (110) step B further comprises the following sub-steps:
B1. detecting the distance of each extracted bit (51, 52, 53, 54) from said worktop (3);
B2. subtracting from each value obtained in the step B1 the thickness of said panel (P) along said movement direction (Z); and
B3. adding the predetermined drilling depth value (D, D1, D2, D3, D4) to each value obtained in step B2, so as to obtain movement values of said drilling unit (2) during said step B.

6. Method according to any one of the preceding claims, **characterized in that** said drilling depth (D, D1, D2, D3, D4) of said bits (51, 52, 53, 54) are equal to each other.

7. Drilling machine (1) for drilling panels (P), comprising
a drilling unit (2), movable along one direction of movement (Z), and comprising
a plurality of spindles (41, 42, 43, 44), each capable of selectively switching from an extracted position to a retracted position and vice versa, and
a plurality of drilling bits (51, 52, 53, 54) each fixed on one of the respective of said spindles (41, 42, 43, 44), and
a control unit (U), operationally connected to said drilling unit (2), to handle said drilling unit along said movement direction (Z) and to switch said spindles (41, 42, 43, 44) from said extracted position to said retracted position and vice versa,
said drilling machine (1) being **characterized in that** said control unit (U) is configured to carry out the method according to any one of the preceding claims.

8. Drilling machine (1) according to the preceding claim, **characterized in that** it comprises a worktop (3) for supporting said panels (P) to be drilled.

9. Drilling machine (1) according to any of the claims 7 - 8, **characterized**
**in that** it comprises a measurement system (6), which comprises
a conductive plate (7), to be arranged in a reference position,
at least one current generator (101, 102, 103, 104), electrically connected to a respective drilling bit (51, 52, 53, 54), said at least one current generator being capable of generating a reference current on command,
a plurality of resistors (91, 92, 93, 94), each series connected to said at least one generator (101, 102, 103, 104),
a detecting module (8), electrically connected to said conductive plate (7) through a common knot (81) and to each of said resistors (91,92, 93, 94),
wherein said drilling unit is moved along said movement direction (Z) toward said conductive plate (7), so that, when each drilling bit (51, 52, 53, 54) touches said conductive plate (7), said at least one current generator (101, 102, 103, 104) generates a current and said detecting module (8) detects the passage of said generated current passing through the respective resistor (91, 92, 93, 94), so as to detect the relative position of said drilling unit (2), and said control unit (U) passes said drilling bit (51, 52, 53, 54) from said extracted position to said retracted position.

10. Drilling machine (1) according to any one of claims 7-8 **characterized**
**in that** it comprises a measure system (6), comprising
a load cell, to be arranged in a reference position,
a detecting module, electrically connected to said load cell,
wherein said drilling unit is moved along said movement direction (Z) to said load cell, so that, when said load cell detects a stress caused by each drilling bit (51, 52, 53, 54), said load cell generates an electrical signal to said detecting module so as to detect the position of said drilling unit (2), and said control unit (U) switches said drilling bit (51, 52, 53, 54) from said extracted position to said retracted position.

11. Drilling machine (1) according to any one of claims 9-10, **characterized in that** said detecting module (8) is incorporated in said control unit (U).

12. Drilling machine (1) according to any one of claims 9-11, **characterized in that** said conductive plate (7) or said load cell is arranged on said worktop (3).

13. Drilling machine (1) according to any one of claims 9 - 11, when dependent on claim 8, **characterized in that** said conductive plate (7) or said load cell is incorporated in said worktop (3).

## Patentansprüche

1. Bohrmethode für Platten (P) mit zwei oder mehr Bohrkronen (51, 52, 53, 54), um mindestens eine Platte (P) zu bohren, wobei die Bohrkronen (51, 52, 53, 54) darauf installiert werden eine Bohreinheit (2), die entlang mindestens einer Bewegungsrichtung (Z) bewegbar ist, und wobei jeder der Bohrmeißel (51, 52, 53, 54) so konfiguriert ist, dass er eine herausgezogene Position einnimmt, in der er bohren kann mindestens ein Paneel (P) und eine zurückgezogene Position, in der es nicht möglich ist, das mindestens eine Paneel (P) zu bohren, wobei die Methode die folgenden Schritte umfasst:
A. Anordnen von zwei oder mehr Bohrmeißeln (51, 52, 53, 54) in der herausgezogenen Position;
B. Erfassen (110) der relativen Position (Δᵢⱼ, Δ₃₂, Δ₃₄) zwischen den Bohrmeißeln (51, 52, 53, 54) in der herausgezogenen Position oder in der zurückgezogenen Position;
C. Bewegen (120, 130) der Bohreinheit (2) entlang der mindestens einen Bewegungsrichtung (Z), so dass die Bohrmeißel (51, 52, 53, 54) in der herausgezogenen Position ein entsprechendes Loch (F) ausführen mit einer jeweiligen Bohrtiefe (D, D1, D2, D3, D4); und **dadurch gekennzeichnet, dass** die Methode außerdem den folgenden Schritt umfasst:
D. Umschalten (140) jedes Bohrmeißels (51, 52, 53, 54) in der herausgezogenen Position von der herausgezogenen Position in die zurückgezogene Position, jedes Mal, wenn jeder Bohrmeißel (51, 52, 53, 54) die jeweilige Position erreicht Bohrtiefe (D, D1, D2, D3, D4).

2. Methode nach Anspruch 1, **dadurch gekennzeichnet, dass** die relative Position (Δᵢⱼ, Δ₃₂, Δ₃₄) zwischen den Bohrmeißeln (51, 52, 53, 54) in der herausgezogenen oder zurückgezogenen Position gleich der Ausrichtungsdifferenz entlang der Bewegungsrichtung ist (Z), unter jeder Spitze der Bits (51, 52, 53, 54).

3. Methode nach einem der vorhergehenden Ansprüche, **dadurch gekennzeichnet, dass** die relative Position (Δᵢⱼ, Δ₃₂, Δ₃₄) jedes Bohrmeißels (51, 52, 53, 54) in der ausgefahrenen oder zurückgezogenen Position in Bezug auf die Bohrkrone erfasst wird Bohrspitze eines ersten der herausgezogenen oder zurückgezogenen Bohrer (51, 52, 53, 54), vorzugsweise des herausgezogenen (53) oder zurückgezogenen Bohrers, dessen Spitze zum Bohren näher an der Oberfläche der Platte (P) liegt.

4. Methode nach einem der vorhergehenden Ansprüche,
wobei die Platte (P) auf einer Arbeitsplatte (3) angeordnet ist, und
wobei die Methode **dadurch gekennzeichnet ist, dass** die mindestens eine Bewegungsrichtung (Z) senkrecht zur Arbeitsplatte (3) verläuft.

5. Methode nach Anspruch 4, **dadurch gekennzeichnet, dass** der Schritt B des Erfassens (110) außerdem die folgenden unterschritte umfasst:
B1. Erfassen des Abstands jedes entnommenen Bits (51, 52, 53, 54) von der Arbeitsplatte (3);
B2. Subtrahieren der Dicke des Paneels (P) entlang der Bewegungsrichtung (Z) von jedem im Schritt B1 erhaltenen Wert; und
B3. Addieren des vorgegebenen Bohrtiefenwerts (D, D1, D2, D3, D4) zu jedem in Schritt B2 erhaltenen Wert, um Bewegungswerte der Bohreinheit (2) während Schritt B zu erhalten.

6. Methode nach einem der vorhergehenden Ansprüche, **dadurch gekennzeichnet, dass** die Bohrtiefen (D, D1, D2, D3, D4) der Bohrmeißel (51, 52, 53, 54) einander gleich sind.

7. Bohrmaschine (1) zum Bohren von Platten (P), umfassend eine Bohreinheit (2), die entlang einer Bewegungsrichtung (Z) bewegbar ist und umfasst
eine Vielzahl von Spindeln (41, 42, 43, 44), von denen jede selektiv von einer ausgefahrenen Position in eine eingefahrene Position und umgekehrt umschalten kann, und eine Vielzahl von Bohrern (51, 52, 53, 54), die jeweils an einer der jeweiligen Spindeln (41, 42, 43, 44) befestigt sind, und
eine Steuereinheit (U), die operativ mit der Bohreinheit (2) verbunden ist, um die Bohreinheit entlang der Bewegungsrichtung (Z) zu bewegen und die Spindeln (41, 42, 43, 44) von der ausgefahrenen Position in die zurückgezogene Position zu schalten Position und umgekehrt,
wobei die Bohrmaschine (1) **dadurch gekennzeichnet ist, dass** die Steuereinheit (U) zur Ausführung der Methode nach einem der vorhergehenden Ansprüche konfiguriert ist.

8. Bohrmaschine (1) nach dem vorhergehenden Anspruch, **dadurch gekennzeichnet, dass** sie eine Arbeitsplatte (3) zum Abstützen der zu bohrenden Platten (P) aufweist.

9. Bohrmaschine (1) nach einem der Ansprüche 7 - 8, **dadurch gekennzeichnet**
**dass** es ein Messsystem (6) umfasst, das Folgendes umfasst eine leitende Platte (7), die in einer Referenzposition anzuordnen ist,
mindestens einen Stromgenerator (101, 102, 103, 104), der elektrisch mit einem jeweiligen Bohrmeißel (51, 52, 53, 54) verbunden ist, wobei der mindestens eine Stromgenerator in der Lage ist, auf Befehl einen Referenzstrom zu erzeugen,
eine Vielzahl von Widerständen (91, 92, 93, 94), die jeweils in Reihe mit dem mindestens einen Generator (101, 102, 103, 104) verbunden sind,
ein Erfassungsmodul (8), das über einen gemeinsamen Knoten (81) elektrisch mit der leitenden Platte (7) und mit jedem der Widerstände (91, 92, 93, 94) verbunden ist, wobei die Bohreinheit entlang der Bewegungsrichtung (Z) in Richtung der leitenden Platte (7) bewegt wird, so dass, wenn jeder Bohrmeißel (51, 52, 53, 54) die leitende Platte (7) berührt, der mindestens eine Strom fließt Der Generator (101, 102, 103, 104) erzeugt einen Strom und das Erfassungsmodul (8) erfasst den Durchgang des erzeugten Stroms durch den jeweiligen Widerstand (91, 92, 93, 94), um so die relative Position zu erfassen die Bohreinheit (2) und die Steuereinheit (U) den Bohrmeißel (51, 52, 53, 54) von der herausgezogenen Position in die zurückgezogene Position überführt.

10. Bohrmaschine (1) nach einem der Ansprüche 7 - 8 **dadurch gekennzeichnet**
**dass** es ein Messsystem (6) umfasst, umfassend eine Wägezelle, zur Anordnung in einer Referenzposition, ein Erfassungsmodul, das elektrisch mit der Wägezelle verbunden ist,
wobei die Bohreinheit entlang der Bewegungsrichtung (Z) zur Wägezelle bewegt wird, so dass die Wägezelle ein elektrisches Signal erzeugt, wenn die Wägezelle eine durch jeden Bohrmeißel (51, 52, 53, 54) verursachte Belastung erkennt an das Erfassungsmodul, um die Position der Bohreinheit (2) zu erfassen, und die Steuereinheit (U) den Bohrmeißel (51, 52, 53, 54) von der herausgezogenen Position in die zurückgezogene Position schaltet.

11. Bohrmaschine (1) nach einem der Ansprüche 9 - 10, **dadurch gekennzeichnet, dass** das Erkennungsmodul (8) in die Steuereinheit (U) integriert ist.

12. Bohrmaschine (1) nach einem der Ansprüche 9 - 11, **dadurch gekennzeichnet, dass** die leitfähige Platte (7) oder die Wägezelle auf der Arbeitsplatte (3) angeordnet ist.

13. Bohrmaschine (1) nach einem der Ansprüche 9 - 11, sofern abhängig von Anspruch 8, **dadurch gekennzeichnet, dass** die leitende Platte (7) oder die Kraftmessdose in die Arbeitsplatte (3) integriert ist.

## Revendications

1. Procédé de perçage de panneaux (P) au moyen de deux ou plusieurs forets (51, 52, 53, 54) pour percer au moins un panneau (P), dans lequel lesdits forets (51, 52, 53, 54) sont installés sur une unité de forage (2), mobile le long d'au moins une direction de mouvement (Z), et dans laquelle chacun desdits forets (51, 52, 53, 54) est configuré pour prendre une position extraite, dans laquelle il est capable de forer ledit au moins un panneau (P), et une position escamotée, dans laquelle il n'est pas capable de percer ledit au moins un panneau (P),
dans lequel ledit procédé comprend les étapes suivantes:
A. disposer deux ou plusieurs forets (51, 52, 53, 54) dans ladite position extraite;
B. détecter (110) la position relative (Δᵢⱼ, Δ₃₂, Δ₃₄) parmi lesdits forets (51, 52, 53, 54) dans ladite position extraite ou dans ladite position rétractée;
C. manipuler (120, 130) ladite unité de forage (2) le long de ladite au moins une direction de mouvement (Z), de sorte que lesdits forets (51, 52, 53, 54) dans ladite position extraite réalisent un trou respectif (F) ayant une profondeur de forage respective (D, D1, D2, D3, D4); et
**caractérisé en ce que** ledit procédé comprend en outre l'étape suivante:
D. faire passer (140) chacun desdits forets (51, 52, 53, 54) dans la position extraite de ladite position extraite à ladite position rétractée, chaque fois que chaque foret (51, 52, 53, 54) atteint la position respective profondeur de perçage (D, D1, D2, D3, D4).

2. Procédé selon la revendication 1, **caractérisé en ce que** la position relative (Δᵢⱼ, Δ₃₂, Δ₃₄) parmi lesdits forets (51, 52, 53, 54) dans ladite position extraite ou rétractée est égale à la différence d'alignement le long de ladite direction de déplacement (Z), entre chaque pointe desdits forets (51,52, 53, 54).

3. Procédé selon l'une quelconque des revendications précédentes, **caractérisé en ce que** la position relative (Δᵢⱼ, Δ₃₂, Δ₃₄) de chaque foret (51, 52, 53, 54) dans ladite position extraite ou rétractée est détectée par rapport à la pointe de forage d'un premier desdits forets extraits ou rétractés (51, 52, 53, 54), de préférence le trépan extrait (53) ou rétracté dont la pointe de perçage est plus proche de la surface dudit panneau (P).

4. Procédé selon l'une quelconque des revendications précédentes,
dans lequel ledit panneau (P) est disposé sur un plan de travail (3), et
dans lequel ledit procédé est **caractérisé en ce que** ladite au moins une direction de mouvement (Z) est perpendiculaire audit plan de travail (3).

5. Procédé selon la revendication 4, **caractérisé en ce que** ladite étape B de détection (110) comprend en outre les sous-étapes suivantes:
B1. détecter la distance de chaque foret extrait (51, 52, 53, 54) dudit plan de travail (3);
B2. soustraire de chaque valeur obtenue à l'étape B1 l'épaisseur dudit panneau (P) le long de ladite direction de mouvement (Z); et
B3. ajouter la valeur de profondeur de forage prédéterminée (D, D1, D2, D3, D4) à chaque valeur obtenue à l'étape B2, de manière à obtenir des valeurs de mouvement de ladite unité de forage (2) au cours de ladite étape B.

6. Procédé selon l'une quelconque des revendications précédentes, **caractérisé en ce que** lesdites profondeurs de perçage (D, D1, D2, D3, D4) desdits forets (51, 52, 53, 54) sont égales entre elles.

7. Perceuse (1) pour percer des panneaux (P), comprenant une unité de perçage (2), mobile le long d'une direction de mouvement (Z), et comprenant
une pluralité de broches (41, 42, 43, 44), chacune capable de passer sélectivement d'une position extraite à une position rétractée et vice versa, et
une pluralité de forets (51, 52, 53, 54), fixés chacun sur l'une desdites broches respectives (41, 42, 43, 44), et
une unité de commande (U), reliée fonctionnellement à ladite unité de perçage (2), pour manipuler ladite unité de perçage le long de ladite direction de mouvement (Z) et pour faire passer lesdites broches (41, 42, 43, 44) de ladite position extraite à ladite position rétractée position et vice versa,
ladite machine de forage (1) étant **caractérisée en ce que** ladite unité de commande (U) est configurée pour mettre en œuvre le procédé selon l'une quelconque des revendications précédentes.

8. Perceuse (1) selon la revendication précédente, **caractérisée en ce qu'**elle comprend un plan de travail (3) pour supporter lesdits panneaux (P) à percer.

9. Perceuse (1) selon l'une quelconque des revendications 7 - 8, **caractérisée**
**en ce qu'** il comprend un système de mesure (6) qui comprend une plaque conductrice (7), à disposer dans une position de référence, au moins un générateur de courant (101, 102, 103, 104), connecté électriquement à un foret respectif (51, 52, 53, 54), ledit au moins un générateur de courant étant capable de générer un courant de référence sur commande,
une pluralité de résistances (91, 92, 93, 94), chaque série étant connectée audit au moins un générateur (101, 102, 103, 104),
un module de détection (8), connecté électriquement à ladite plaque conductrice (7) par l'intermédiaire d'un noeud commun (81) et à chacune desdites résistances (91,92, 93, 94),
dans lequel ladite unité de forage est déplacée le long de ladite direction de mouvement (Z) vers ladite plaque conductrice (7), de sorte que, lorsque chaque foret (51, 52, 53, 54) touche ladite plaque conductrice (7), ledit au moins un courant générateur (101, 102, 103, 104) génère un courant et ledit module de détection (8) détecte le passage dudit courant généré traversant la résistance respective (91, 92, 93, 94), de manière à détecter la position relative de ladite unité de forage (2) et ladite unité de commande (U) font passer ledit foret (51, 52, 53, 54) de ladite position extraite à ladite position rétractée.

10. Perceuse (1) selon l'une quelconque des revendications 7 - 8 **caractérisée**
**en ce qu'** il comprend un système de mesure (6), comprenant
une cellule de pesée, à disposer dans une position de référence,
un module de détection, connecté électriquement à ladite cellule de pesée,
dans lequel ladite unité de forage est déplacée le long de ladite direction de mouvement (Z) jusqu'à ladite cellule de pesée, de sorte que, lorsque ladite cellule de pesée détecte une contrainte provoquée par chaque foret (51, 52, 53, 54), ladite cellule de pesée génère un signal électrique audit module de détection de manière à détecter la position de ladite unité de forage (2), et ladite unité de commande (U) fait passer ledit foret (51, 52, 53, 54) de ladite position extraite à ladite position rétractée.

11. Perceuse (1) selon l'une quelconque des revendications 9 - 10, **caractérisée en ce que** ledit module de détection (8) est incorporé dans ladite unité de commande (U).

12. Perceuse (1) selon l'une quelconque des revendications 9 - 11, **caractérisée en ce que** ladite plaque conductrice (7) ou ladite cellule de pesée est disposée sur ledit plan de travail (3).

13. Perceuse (1) selon l'une quelconque des revendications 9 - 11, lorsqu'elles dépendent de la revendication 8, **caractérisée en ce que** ladite plaque conductrice (7) ou ladite cellule de pesée est incorporée audit plan de travail (3).
